# EUROPÄISCHE PATENTSCHRIFT

(11) **EP 1 076 767 B1**
(45) Veröffentlichungstag und Bekanntmachung des Hinweises auf die Patenterteilung: **06.02.2002**
(21) Anmeldenummer: 99950361.8
(22) Anmeldetag: 06.05.1999
(51) Int. Cl.: F02M 51/06, F02M 61/04, F16K 7/14

(54) **MIKROVENTIL**
MICROVALVE
MICROSOUPAPE

(30) Priorität: 08.05.1998 DE 19820739
(43) Veröffentlichungstag der Anmeldung: 21.02.2001
(73) Patentinhaber: Infineon Technologies AG, 81541 München (DE)
(72) Erfinder: HIEROLD, Christofer, D-81739 München (DE)
(74) Vertreter: Kindermann, Peter, Dipl.-Ing.
(86) Internationale Anmeldenummer: DE9901069
(87) Internationale Veröffentlichungsnummer: WO9958841

(56) Entgegenhaltungen:
- DE-A- 4 422 941
- DE-A- 4 422 945
- US-A- 5 758 864
- PATENT ABSTRACTS OF JAPAN vol. 011, no. 213 (M-605), 10. Juli 1987 (1987-07-10) & JP 62 028585 A (HITACHI METALS LTD), 6. Februar 1987 (1987-02-06)
- PATENT ABSTRACTS OF JAPAN vol. 015, no. 257 (M-1130), 28. Juni 1991 (1991-06-28) & JP 03 084270 A (YOKOGAWA ELECTRIC CORP), 9. April 1991 (1991-04-09)

## Beschreibung

Die vorliegende Erfindung betrifft ein mikromechanisch herstellbares Ventil.

Zur emissionsreduzierten Verbrennung von Kraftstoffen in Verbrennungsmotoren ist die kontrollierte, reproduzierbare und zuverlässige Einspritzung von Kraftstoffen in den Ansaugbereich oder Verbrennungsraum notwendig. Die Zufuhr des Kraftstoffes soll über ein miniaturisiertes, kostengünstig herstellbares, regelbares, robustes, ohne Energiezufuhr dicht schließendes (normally closed, no leak) und schnell reagierendes Ventil erfolgen, das in die Einspritzdüse integriert ist und mit geringer elektrischer Leistung betrieben werden kann. Heutige Einspritzventile sind aufgebaut aus einer Vielzahl mechanischer Einzelkomponenten meist aus Edelstahl. Das Ventil wird von einem halbkugelförmig abgerundeten Ventilstift gebildet, der in einen hohlkugelig geformten Ventilsitz gleitet. Angetrieben wird dieses Ventil über elektromagnetische (Spulen) oder piezoelektrische Antriebe. Das präzise Zusammenwirken der einzeln gefertigten Teile bestimmt die Genauigkeit und Leckrate des Ventils. Durch die großen zu bewegenden Massen sind derartige Ventile langsam und genügen den Anforderungen an die Kraftstoffeinspritzung in modernen Motoren nur ungenügend.

In der DE 44 22 941 A1 ist ein mikromechanisch herstellbares Mikroventil beschrieben, das als Mehrschichtstruktur mit zwei Membranen und einem Gaskanalsystem mit radial angeordneten Kanälen ausgebildet ist.

In der JP 62 028 585A sind alle Merkmale des Oberbegriffs des Anspruchs 1 offenbart.

Aufgabe der vorliegenden Erfindung ist es, ein einfach herstellbares Mikroventil anzugeben, das für den Einbau in Verbrennungsmotoren geeignet ist.

Diese Aufgabe wird mit dem Mikroventil mit den Merkmalen des Anspruches 1 gelöst. Ausgestaltungen ergeben sich aus den abhängigen Ansprüchen.

Bei dem erfindungsgemäßen Mikroventil befinden sich zwischen einer Einlaßöffnung und einer Auslaßöffnung der Ventilsitz mit einem Verschlußteil. Der Ventilsitz besteht im wesentlichen aus einem Substrat mit einem Stutzen für die Einlaß- oder die Auslaßöffnung. Auf den Stutzen wird in der Ruhelage des Ventiles das Verschlußteil aufgedrückt. Das Verschlußteil besteht im wesentlichen aus einer mikromechanischen elastischen Membran, vorzugsweise ein Anteil einer Polysiliziumschicht, die mit der einen Seite auf den Stutzen drückt und auf deren anderer Seite ein Hohlraum vorhanden ist, in den sich die Membran hineindrücken läßt. Wenn ein Gas oder eine Flüssigkeit auf die dem Stutzen zugewandte Seite der Membran strömt, wird die Membran von dem Stutzen abgehoben und in den Hohlraum hineingedrückt, so daß das Gas oder die Flüssigkeit von der Einlaßöffnung her an dem Rand des Stutzens vorbei in die Auslaßöffung des Ventiles strömen kann. Die Membran kann durch einen stempelartigen Aufsatz versteift sein, um ein gleichmäßiges Öffnen des Ventiles zu gewährleisten.

Es folgt eine genauere Beschreibung des Mikroventils anhand eines Ausführungsbeispieles, das die typische Struktur des Ventiles verdeutlicht, anhand der Figuren 1 bis 4.
Figur 1 zeigt einen Querschnitt des Ventils.
Figur 2 zeigt die in Figur 1 eingezeichnete Schnittansicht.
Figuren 3 und 4 zeigen den Ventilmechanismus im geschlossenen bzw. im geöffneten Zustand.

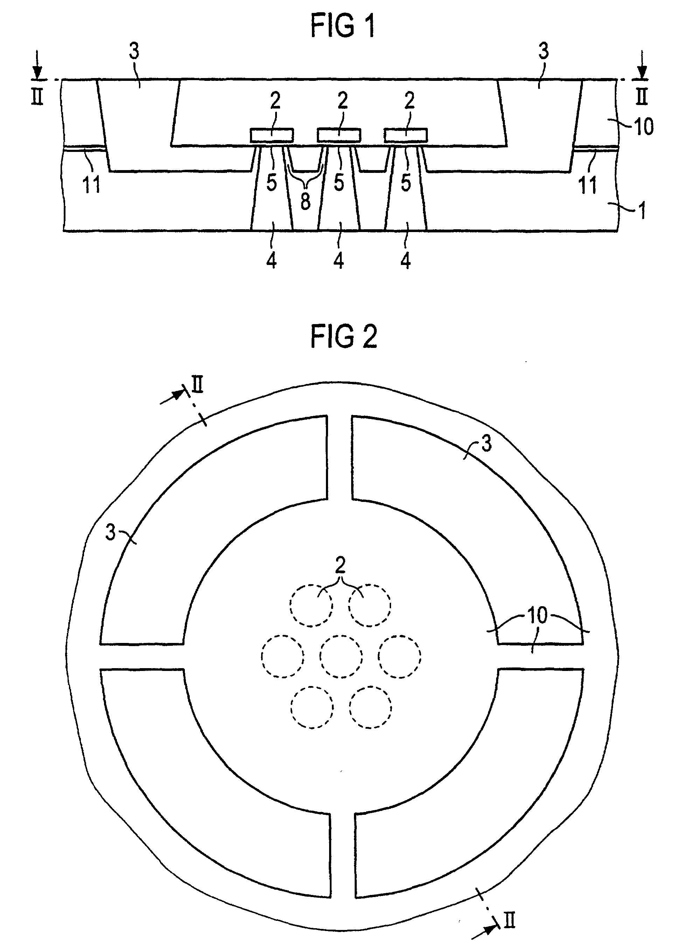

Das Mikroventil wird vorzugsweise aus mehreren Schichtlagen mit Methoden der Mikromechanik hergestellt. Der Ventilsitz befindet sich an einem Substrat 1 (s. Figur 1), das z. B. ein Siliziumkörper sein kann. Da die Herstellung dadurch vereinfacht wird, wenn nur Oberseiten von Substraten bearbeitet werden, ist das in der Figur 1 dargestellte Ausführungsbeispiel aus zwei Substraten 1, 10 zusammengesetzt, deren strukturierte Oberseiten einander zugewandt und z. B. mit einer Verbindungsschicht 11 dauerhaft miteinander verbunden sind (z. B. mittels wafer bonding).

Bei dem in der Figur 1 dargestellten Ausführungsbeispiel ist die Einlaßöffnung 3 oben, also in dem zweiten Substrat 10 vorhanden. Die Einlaßöffnung 3 und die Auslaßöffnung 4 können aus mehreren Kanälen bestehen. Jedem Kanal einzeln oder Gruppen von Kanälen gemeinsam kann jeweils ein Verschluß des Ventils zugeordnet sein.

Ein solcher Verschluß besteht aus einem Stutzen 8, der in dem dargestellten Ausführungsbeispiel zu der Auslaßöffnung 4 gehört, und einer elastischen Membran 5, gegen die der Stutzen drückt, so daß dessen Öffnung verschlossen ist. Auf der Gegenseite der Membran 5 ist ein Hohlraum in dem zweiten Substrat 10 oder in einer entsprechenden Schicht ausgebildet, in den die Membran hineingedrückt werden kann.

Figur 2 zeigt den in Figur 1 eingezeichneten Schnitt, der eine Aufsicht auf das Ventil mit der Lage der einzelnen Ventilverschlüsse als verdeckte Konturen zeigt. Das zweite Substrat 10 besitzt eine kreisringförmige Einlaßöffnung 3, die nur durch vier Verbindungsstege unterbrochen ist. Diese Einlaßöffnung mündet in einen Zwischenraum zwischen den Substraten 1, 10, der zu den Stutzen in der Mitte führt. Die Abmessungen der hier als Beispiel rund gezeichneten Hohlräume 2, die in etwa auch den Abmessungen der Stutzen und der Membranen entsprechen, sich in Figur 2 gestrichelt als verdeckte Konturen eingezeichnet, um als Beispiel die Anordnung von hier sieben verschließbaren Auslaßöffnungen wiederzugeben.

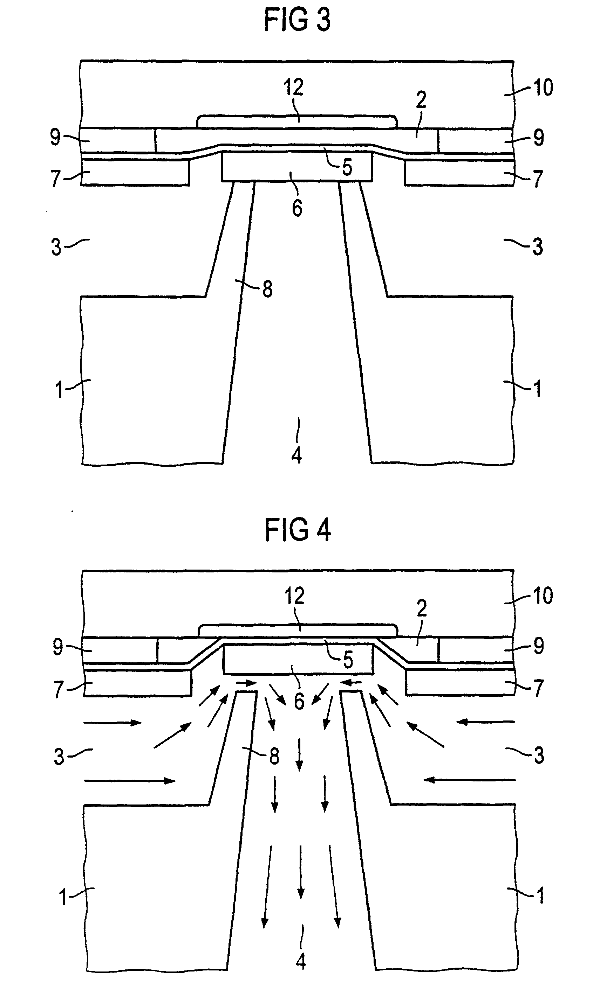

Die Figuren 3 und 4 zeigen im Querschnitt den Verschlußmechanismus in einer Vergrößerung. Figur 3 zeigt einen Stutzen 8 einer Auslaßöffnung 4 in dem ersten Substrat 1. Dargestellt ist der geschlossene Normalzustand des Mikroventils. Die Membran 5 ist Teil einer Schicht, die hier als Beispiel zwischen einer Deckschicht 7 (z. B. aus Oxid oder Nitrid) und einer Hilfsschicht 9 (z. B. aus Oxid) eingefaßt ist. Die Deckschicht 7 besitzt eine Aussparung für die Membran. In der Hilfsschicht 9 ist der Hohlraum 2 ausgebildet. Zur Versteifung der Membran 5 und zur Verbesserung der Verschlußeigenschaften befindet sich auf der Membran ein dem Stutzen 8 zugewandter stempelartiger Aufsatz 6 zur Versteifung der Membran. Dieser stempelartige Aufsatz, der auch weggelassen sein kann, kann insbesondere aus einem Material bestehen, das auf Grund seiner Elastizität oder wegen hoher chemischer oder physikalischer Widerstandsfähigkeit für einen sicheren Verschluß des Ventils auch nach längerer Beanspruchung besonders geeignet ist. Der stempelartige Aufsatz 6 kann insbesondere durch einen Anteil der geeignet strukturierten Deckschicht 7 gebildet sein.

Figur 4 zeigt den Ausschnitt der Figur 3 für den geöffneten Zustand des Ventils. Von der Einlaßöffnung 3 her einströmendes Gas, das durch die eingezeichneten Pfeile angedeutet ist, drückt von unten gegen die Membran 5 und deren stempelartigen Aufsatz 6, so daß der Aufsatz 6 von dem Rand des Stutzens abgehoben wird und für das Gas der Weg in die Auslaßöffnung 4 frei wird. In der Darstellung der Figur 4 ist die Membran 5 an die obere Wand des Hohlraumes gedrückt, so daß der Verschluß voll geöffnet ist. Entsprechend arbeiten die Verschlüsse auf den übrigen Stutzen der verschiedenen Auslaßöffnungen.

Bevorzugte Abmessungen des in den Figuren dargestellten Ausführungsbeispiels sind: Gesamtdurchmesser etwa 15 mm, Durchmesser des von den Einzelventilen eingenommenen Bereiches etwa 10 mm, vertikale Abmessung des Durchflußkanales zwischen den Substraten etwa 50 µm, Durchmesser der Auslaßöffnung etwa 50 µm, Dicke der Deckschicht 7 etwa 2-3 µm, Dicke der Membranschicht 5 etwa 0,4 µm, Dicke der Hilfsschicht 9 etwa 0,6 µm, Dicke der Substrate typisch etwa 0,5 mm.

Anhand des Ausführungsbeispieles ist das Prinzipielle des erfindungsgemäßen Mikroventils leicht zu erkennen. Wesentliche Merkmale sind ein Ventilsitz mit einer eben berandeten Öffnung, eine elastische Membran über einem Hohlraum, die gegen den vorzugsweise erhabenen Rand der Öffnung drückt, so daß die Öffnung verschlossen wird, und ein Einlaßkanal und ein Auslaßkanal, die auf verschiedenen Seiten dieser Öffnung und auf derselben Seite der Membran zum Ventilsitz geführt sind. Die Membran ist vorzugsweise ein Anteil einer in eine mehrlagige Schichtstruktur eingebetteten elastischen Schicht, die insbesondere Polysilizium sein kann. Diese Schicht kann sehr dünn sein und zur Verbesserung der Verschlußeigenschaften im Bereich der zu verschließenden Öffnung verdickt oder mit einer weiteren Schicht (stempelartiger Aufsatz) verstärkt sein.

Das Ventil kann auch aktiv betrieben werden, indem durch eine geeignete Ansteuerschaltung die Membran 5 von dem Stutzen 8 abgehoben wird. Das kann z. B. durch elektrostatische Anziehung bewirkt werden. Zu diesem Zweck wird das Material der Membran elektrisch leitend ausgebildet. Bei Verwendung von Polysilizium für die Membran kann das Polysilizium elektrisch leitend dotiert werden. An der der Membran gegenüberliegenden Wand des Hohlraumes 2 wird, z. B. durch Dotieren eines Bereiches in dem Halbleitermaterial des zweiten Substrates 10 eine Elektrode 12 ausgebildet. Die Membran und diese Elektrode 12 werden angeschlossen an eine elektronisch Schaltung, die in an sich bekannter Weise in einem der Substrate integriert sein kann und mit der eine elektrische Spannung so angelegt werden kann, daß die Membran durch elektrostatische Kräfte zur oberen Wand des Hohlraumes hin gezogen wird und die Öffnung des Ventiles freigibt.

Das Mikroventil hat eine Vielzahl von Vorteilen gegenüber herkömmlichen Mikroventilen. Auch bei der aus einseitig bearbeiteten Substraten zusammengesetzten Ausführungsform ist die Anzahl der Baugruppen, die paßgenau zusammengefügt werden müssen, auf zwei reduziert. Das zweite Substrat 10 enthält vorzugsweise alle aktiven Funktionsblöcke, wie die beweglichen und ggf. angetriebenen Ventilteile (mit Methoden der Oberflächenmikromechanik hergestellte Membranen, ggf. mit Stempel), Sensoren, Antriebs- und Regelschaltungen zum aktiven Betrieb des Ventils. In diesem Substrat befinden sich vorzugsweise die Einlaßöffnungen beispielsweise für den Kraftstoff. Das erste Substrat 1 wird vorzugsweise nicht mit einer Schichtstruktur versehen, sondern nur mit den Methoden der Bulkmikromechanik zur Bearbeitung solider Substratkörper bearbeitet. Es enthält die Ventilsitze, Durchflußkanäle und die Ventilauslaßöffnungen.

Die Grundgeometrie der Ventile kann auch rechteckig sein, was den Herstellungsmethoden der Mikromechanik besser angepaßt ist. Die Ventilfunktion des Gesamtbauteiles wird vorzugsweise durch eine Vielzahl kleiner Einzelventile gewährleistet (z. B. ca. 8000 für einen Durchflußquerschnitt von 0,6 mm²). Wenn das Ventil über eine Vielzahl von einzeln ansteuerbaren (d. h. aktiv zu schaltenden) Einzelventilen verfügt, kann die Durchflußrate in sehr kleinen Stufen über einen großen Bereich eingestellt werden, ohne daß der Öffnungshub eines Einzelventils geregelt werden muß. Ein Einzelventil, das gesteuert wird, hat daher vorzugsweise nur zwei mögliche Zustände: offen oder geschlossen. Die Regelung der Durchflußrate können Sensoren in das Substrat integriert sein, mit denen z. B. die Durchflußrate, der Druck der Strömung oder die Temperatur gemessen werden.

Das Ventil ist im Normalzustand geschlossen. Der Anpreßdruck der Membran bzw. des Stempels auf den Rand des Ventilsitzes wird durch die Anordnung dieser Teile auf den zusammengefügten Substraten eingestellt. Wenn der Durchmesser des von den Einzelventilen eingenommenen Bereiches etwa 10 mm und der Durchmesser einer Auslaßöffnung etwa 50 bis 100 µm beträgt, genügt bei einer Polysiliziummembran von etwa 0,4 µm Dicke eine durch das Andrücken des Ventilsitzes bedingte Parallelverschiebung oder Durchbiegung der Membran von 100 nm, um das Ventil ohne zusätzlich anliegende Kräfte gegenüber einem Überdruck von 3 bar zu schließen.

Bei aktivem Betrieb des Ventiles wird das Einzelventil durch Anlegen einer elektrischen Spannung zwischen der Membran und der im Substrat auf der anderen Seite des Hohlraumes durch Dotierung ausgebildeten Elektrode geöffnet. Dazu genügen Spannungen von weniger als 100 V. Die elektrostatische Öffnung des Ventils erfolgt nahezu ohne Leistungsaufnahme der zugehörigen Schaltung. Auf Grund der geometrischen Anordnung liegt der Antrieb außerhalb des mit dem durchströmenden Medium (Kraftstoff) in Berührung stehenden Ventilbereichs und ist daher geschützt. Das Ventil kann daher zur Dosierung der Durchflußmenge elektrisch leitender Medien benutzt werden.

Wenn die Durchflußmenge geregelt werden soll, wird vorzugsweise eine Anordnung nach Art der beschriebenen Ausführungsform mit mehreren aktiv betriebenen einzelnen Mikroventilen verwendet. Durch die Anzahl der jeweils geöffneten Ventile wird die Durchflußmenge geregelt oder gesteuert. Dafür kann insbesondere eine Ansteuerschaltung vorgesehen sein, die jeweils in Abhängigkeit von einer gewünschten Durchflußmenge eine entsprechende Anzahl von Ventilen öffnet.

Wenn eine automatische Regelung oder Steuerung des Ventiles verlangt wird, kann das Ventil mit einem oder mehreren, insbesondere mikromechanischen, Sensoren integriert und mit einer elektronischen Regelschaltung versehen sein, die als Ansteuerschaltung für das Ventil und gleichzeitig zur Erfassung und Auswertung eines Sensorsignales vorgesehen ist und mit der die Ansteuerung des Ventiles in Abhängigkeit von dem Sensorsignal vorgenommen werden kann.

Wegen der geringen Masse der Ventilmembran und deren geringen Abmessungen liegt die Resonanzfrequenz des mechanischen Systems sehr hoch (typisch bei ca. 1 MHz). Dies garantiert eine kurze Ansprechzeit des Ventils, die vorwiegend durch die Eigenschaften des durchströmenden Mediums bestimmt wird.

Das Ventil ist weitgehend miniaturisiert und kann einfach und kostengünstig in großer Stückzahl hergestellt werden. Insbesondere mit einer in den Ventilkörper integrierten Sensorik und einer integrierten elektronischen Schaltung zum Betrieb der Sensoren und zur Steuerung des Ventiles ergeben sich vielfältige Anwendungsmöglichkeiten des erfindungsgemäßen Ventiles. Eine solche Integration wird dadurch erleichtert, daß das erfindungsgemäße Ventil zusammen mit weiteren Halbleiterbauelementen in Silizium hergestellt werden kann.

## Patentansprüche

1. Mikroventil mit mindestens einer Einlaßöffnung (3) und einer Auslaßöffnung (4), mit einem Ventilsitz mit einer eben berandeten Öffnung und mit einer elastisch beweglichen oder verformbaren Membran (5, 6), die parallel zur Ebene des Randes der Öffnung über einem Hohlraum (2) angeordnet ist,
- bei dem die Membran mit der Seite, die von dem Hohlraum abgewandt ist, gegen den Rand der Öffnung im Ventilsitz drückt, so daß die Öffnung verschlossen wird,
- bei dem die Einlaßöffnung (3) und die Auslaßöffnung (4) auf der von dem Hohlraum abgewandten Seite der Membran und auf verschiedenen Seiten des Randes der Öffnung im Ventilsitz münden und
- bei dem die Membran derart in den Hohlraum gedrückt werden kann, daß die Öffnung im Ventilsitz geöffnet wird und eine Verbindung zwischen der Einlaßöffnung und der Auslaßöffnung hergestellt wird,
**dadurch gekennzeichnet, daß**,
- der Ventilsitz mit der Öffnung und die Auslaßöffnung (4) in einem ersten Substrat (1) aus Silizium ausgebildet sind,
- die Membran (5, 6), der Hohlraum (2) und die Einlaßöffnung (3) in einem zweiten Substrat (10) aus Silizium ausgebildet sind,
- die Membran ein Anteil einer elastischen Membranschicht (5) aus Polysilizium ist,
- die Substrate (1, 10) dauerhaft miteinander verbunden sind, so daß eine Parallelverschiebung oder Durchbiegung der Membran bewirkt und damit ein Anpreßdruck der Membran auf den Rand des Ventilsitzes eingestellt ist,
- die Membran elektrisch leitend ausgebildet und mit einem elektrischen Anschluß versehen ist,
- auf der von der Membran abgewandten Seite des Hohlraumes (2) eine Elektrode (12) ausgebildet und mit einem elektrischen Anschluß versehen ist und
eine Ansteuerschaltung vorhanden ist, mit der eine elektrische Spannung zwischen die Membran und die Elektrode (12) derart angeleg werden kann, daß die Membran von der Öffnung im Ventilsitz abgehoben wird und eine Verbindung zwischen der Einlaßöffnung und der Auslaßöffnung hergestellt wird.

2. Mikroventil, das mit mehreren einzelnen Mikroventilen nach Anspruch 1 versehen ist,
bei dem die Ansteuerschaltung dafür vorgesehen ist, in Abhängigkeit von einer gewünschten Durchflußmenge eine entsprechende Anzahl von Ventilen zu öffnen.

3. Mikroventil nach Anspruch 1 oder 2,
das mit mindestens einem Sensor integriert und mit einer elektronischen Regelschaltung versehen ist, die als Ansteuerschaltung für das Ventil und gleichzeitig zur Erfassung eines Sensorsignales vorgesehen ist und mit der die Ansteuerung des Ventiles in Abhängigkeit von dem Sensorsignal vorgenommen werden kann.

## Claims

1. Microvalve with at least one inlet orifice (3) and one outlet orifice (4), with a valve seat with an orifice having a plane edge, and with an elastically moveable or deformable diaphragm (5, 6) which is arranged parallel to the plane of the edge of the orifice above a cavity (2),
- in which the diaphragm presses with the side facing away from the cavity against the edge of the orifice in the valve seat, so that the orifice is closed,
- in which the inlet orifice (3) and the outlet orifice (4) issue on that side of the diaphragm which faces away from the cavity and on different sides of the edge of the orifice in the valve seat, and
- in which the diaphragm can be pressed into the cavity in such a way that the orifice in the valve seat is opened and a connection is made between the inlet orifice and the outlet orifice,
**characterized in that**
- the valve seat, together with the orifice, and the outlet orifice (4) are formed in a first substrate (1) made of silicon,
- the diaphragm (5, 6), the cavity (2) and the inlet orifice (3) are formed in a second substrate (10) made of silicon,
- the diaphragm is a portion of an elastic diaphragm layer (5) made of polysilicon,
- the substrates (1, 10) are permanently connected to one another, so that a parallel displacement or flexion of the diaphragm is brought about and a pressure with which the diaphragm is pressed onto the edge of the valve seat is thereby set,
- the diaphragm is designed to be electrically conductive and is provided with an electric connection,
- an electrode (12) is formed on that side of the cavity (2) which faces away from the diaphragm, said electrode being provided with an electrical connection, and
- there is an activating circuit, by means of which an electrical voltage can be applied between the diaphragm and the electrode (12) in such a way that the diaphragm is lifted from the orifice in the valve seat and a connection is made between the inlet orifice and the outlet orifice.

2. Microvalve, which is provided with a plurality of individual microvalves according to Claim 1, in which the activating circuit is provided for the purpose of opening a corresponding number of valves as a function of a desired throughflow quantity.

3. Microvalve according to Claim 1 or 2, which is integrated with at least one sensor and is provided with an electronic regulating circuit which is provided as an activating circuit for the valve and at the same time for detecting a sensor signal and by means of which the activation of the valve can be carried out as a function of the sensor signal.

## Revendications

1. Microsoupape comprenant au moins un orifice (3) d'entrée et un orifice (4) de sortie, un siège de soupape ayant une ouverture à bord plan et une membrane (5, 6) mobile élastiquement ou déformable qui est disposée parallèlement au plan du bord de l'ouverture au dessus d'une cavité (2),
- dans laquelle la membrane est appliquée par le côté qui est éloigné de la cavité sur le bord de l'ouverture du siège de soupape, de sorte que l'ouverture est fermée,
- dans laquelle l'orifice (3) d'entrée et l'orifice (4) de sortie débouchent du côté de la membrane qui est éloignée de la cavité et sur des côtés différents du bord de l'ouverture du siège de soupape, et
- dans laquelle la membrane peut être refoulée dans la cavité, de sorte que l'ouverture du siège de soupape soit ouverte et qu'il soit ménagé une communication entre l'orifice d'entrée et l'orifice de sortie,
**caractérisé en ce que**
- le siège de soupape ayant l'ouverture et l'orifice (4) de sortie sont constitués dans un premier substrat en silicium,
- la membrane (5, 6), la cavité (2) et l'orifice (3) d'entrée sont constitués dans un deuxième substrat (10) en silicium,
- la membrane fait partie d'une couche (6) élastique de membrane en polysilicium,
- les substrats (1, 10) sont reliés entre eux de manière permanente, de façon à provoquer un décalage parallèle ou une flexion de la membrane et à régler ainsi une pression d'application de la membrane sur le bord du siège de soupape,
- la membrane est constituée de manière conductrice de l'électricité et est munie d'une borne électrique,
- du côté de la cavité (2) éloignée de la membrane est constituée une électrode (12) et celle-ci est munie d'une borne électrique, et
- il est prévu un circuit de commande par lequel une tension électrique peut être appliquée entre la membrane et l'électrode (12), de façon que la membrane soit soulevée de l'ouverture du siège de soupape et de façon à ménager une communication entre l'orifice d'entrée et l'orifice de sortie.

2. Microsoupape qui est munie de plusieurs microsoupapes individuelles suivant la revendication 1,
dans laquelle le circuit de commande est prévu pour ouvrir un nombre adéquat de soupapes en fonction d'un débit souhaité.

3. Microsoupape suivant la revendication 1 ou 2,
qui est intégrée avec au moins un capteur et qui est munie d'un circuit électronique de régulation qui est prévu comme circuit de commande de la soupape et en même temps pour détecter un signal de capteur et par lequel la commande de la soupape peut être effectuée en fonction du signal du capteur.
